# EUROPÄISCHE PATENTSCHRIFT

(11) **EP 2 907 701 B1**
(45) Veröffentlichungstag und Bekanntmachung des Hinweises auf die Patenterteilung: **25.05.2016**
(21) Anmeldenummer: 14305216.5
(22) Anmeldetag: 18.02.2014
(51) Int. Cl.: B60R 16/027

(54) **Vorrichtung zur Übertragung von elektrischem Strom und/oder Signalen in einem Kraftfahrzeug**
Device for transmission of electrical current and/or signals in a motor vehicle
Dispositif de transmission de courant électrique et/ou de signaux dans un véhicule automobile

(43) Veröffentlichungstag der Anmeldung: 19.08.2015
(73) Patentinhaber: Nexans, 75008 Paris (FR)
(72) Erfinder: Krapf, Stefan, 92696 Flossenbürg (DE); Schröer, Frank, 92637 Weiden (DE); Pedimonte, Andreas, 92637 Weiden (DE)
(74) Vertreter: Feray, Valérie

(56) Entgegenhaltungen:
- JP-A- H0 917 541
- JP-A- H09 171 870
- JP-U- H02 138 889

## Beschreibung

Die Erfindung bezieht sich auf eine Vorrichtung zur Übertragung von elektrischem Strom und/oder von Signalen in einem Kraftfahrzeug gemäß dem Oberbegriff des Patentanspruchs 1.

Eine solche Vorrichtung geht beispielsweise aus der JP H09 171870 A hervor.

Wickelfedern werden heute bevorzugt in Kraftfahrzeugen verwendet, um elektrische oder optische Signale, beispielsweise zum Auslösen des Airbags im Lenkrad, zwischen feststehenden und beweglichen Fahrzeugteilen zu übertragen. Die Leitung kann elektrische und/oder optische Leitungen umfassen. Wickelfedern gewährleisten eine sichere und dauerhafte elektrische und/oder optische Verbindung. Als Wickelfeder wird eine Leitung bezeichnet, die innerhalb der Kassette entweder spiralförmig in konzentrischen Windungen um einen Kern in der Kassette aufgewickelt oder in einer Schlaufe geführt ist (letztere auch bezeichnet als Kurzband-Wickelfeder oder U-turn-Wickelfeder). Mit ihren beiden Enden verbindet die Leitung ein mit dem Lenkrad drehbares Bauteil (den Rotor) mit einem fahrzeugfesten Bauteil (dem Stator) elektrisch und/oder optisch miteinander. Wickelfedern erlauben eine relative Drehbewegung des Stators und des Rotors, ohne die sichere elektrische und/oder optische Verbindung zwischen fahrzeugfesten und lenkradfesten Fahrzeugteilen zu beeinträchtigen. Die Leitung kann beispielsweise eine flexible Flachbandleitung (FBL) sein, d.h. in Isoliermaterial mit Abstand zueinander eingebettete Leiterbahnen. Der Rotor und der Stator bilden zusammen ein die Leitung aufnehmendes Gehäuse, welches auch als Wickelfederkassette bezeichnet wird.

Für den Einbau der Wickelfederkassette in das Lenkrad eines Kraftfahrzeugs ist es wichtig, daß die beiden Enden der FBL oder einer anderen Leitung eine bestimmte Position zueinander haben. Damit wird gewährleistet, daß die vorgegebenen Umdrehungen des Rotors in beide Drehrichtungen des Lenkrads vollzogen werden können, ohne daß die Leitung von der Kassette abreißt.

Die DE 42 16 526 A1 beschreibt eine in einer kreisförmigen Kassette untergebrachte, in Windungen verlaufende elektrische Leitung, wobei die Kassette aus einem um die Achse der Kassette drehbaren Rotor und einem Stator besteht. Um die beiden Teile während des Einbaus in das Lenkrad eines Kraftfahrzeugs in einer bestimmten Position zueinander zu halten, befindet sich am Rotor ein nach außen abstehender Ansatz zur Aufnahme einer Schraube und eine mittels der Schraube verstellbare Feder. Die Feder wird in Montageposition der Kassette in eine Vertiefung des Stators gedrückt, sodaß sich der Rotor unverdrehbar am Stator anliegt. In Arbeitsposition wird die Arretierung durch Lockern der Schraube aufgehoben.

Die eingangs erwähnte JP H09 171 870 A beschreibt eine Vorrichtung zur Übertragung von elektrischem Strom und/oder von Signalen in einem Kraftfahrzeug. Sie weist eine aus einem Stator und einem Rotor bestehende Wickelfederkassette auf, in welcher eine in Windungen verlaufende Leitung angeordnet ist. An der Wickelkassette ist ein Fixierelement angebracht, durch welches eine für den Einbau derselben in das Lenkrad des Kraftfahrzeugs vorgegebene relative Position von Stator und Rotor zueinander fixiert ist. Das Fixierelement ist ein mit einer Sollbruchstelle ausgerüstetes folienartiges Etikett, das außen an der Wickelfederkassette angeklebt ist und sich vom Rotor bis zum Stator erstreckt.

Der Erfindung liegt die Aufgabe zugrunde, eine verbesserte Vorrichtung zur Übertragung von elektrischem Strom und/oder von Signalen in einem Kraftfahrzeug bereitzustellen, welche eine aus einem Stator und einem Rotor bestehende Wickelfederkassette und mindestens ein Fixierelement aufweist, welche einfach, schnell und kostengünstig zu realisieren ist und bei welchem die Wickelfederkassettenteile sicher zueinander festgestellt werden.

Diese Aufgabe wird entsprechend dem kennzeichnenden Merkmal des Patentanspruchs 1 gelöst.

Die erfindungsgemäße Vorrichtung erlaubt das Fixieren von Stator und Rotor in der für den Einbau der Wickelfederkassette in das Lenkrad vorbestimmten Stellung zueinander. Mit dieser Montageposition bzw. Mittelstellung wird gewährleistet, daß die Leitung in Arbeitsposition nicht beschädigt oder anderweitig beeinträchtigt wird. Die Stellungsfixierung ist durch die unlösbaren mechanischen Verbindungen zwischen dem Etikett und dem Rotor bzw. dem Stator besonders sicher und auch über längere Lager- und Transportzeiten der Wickelfederkassette dauerhaft. Das folienartige Etikett ist ein im Handel erhältliches Element, welches im Vergleich zu anderen, maschinengefertigten Sicherungselementen relativ günstig ist. Die mechanische Festlegung des Etiketts am Stator und am Rotor kann automatisch erfolgen, beispielweise durch Nieten oder Schweißen, wodurch die erfindungsgemäße Vorrichtung auf besonders einfache Weise hergestellt werden kann. Das Etikett wird in Arbeitsposition nach dem Einbau der Wickelfederkassette bei der ersten Drehbewegung des Lenkrads und damit des Rotors zerrissen. Dabei verbleiben keine störenden Elemente, die die Funktion der Wickelfeder beeinträchtigen könnten.

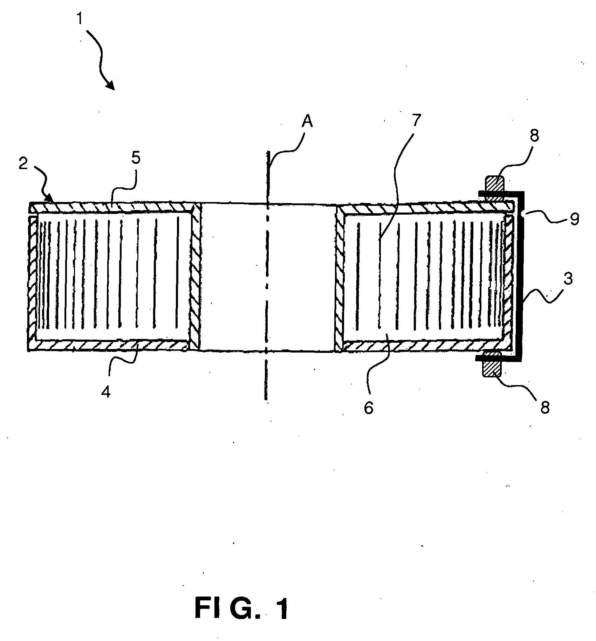

Die erfindungsgemäße Vorrichtung wird anhand der Zeichnung erläutert. Fig. 1 zeigt in schematischer Darstellung einen Schnitt durch eine erfindungsgemäße Vorrichtung nach einem Ausführungsbeispiel.

Die Vorrichtung 1 zur Übertragung von elektrischem Strom und/oder Signalen in einem Kraftfahrzeug weist eine Wickelfederkassette 2 und ein an dieser angebrachtes, folienartiges Etikett 3 auf. Obwohl in den Abbildungen nur ein Etikett 3 dargestellt ist, kann die erfindungsgemäße Vorrichtung 1 auch mehrere Etiketten umfassen, die beispielsweise gleichmäßig um den Umfang der Wickelfederkassette 2 verteilt und angebracht sind.

Die Wickelfederkassette 2 besteht aus einem Stator 4 und einem Rotor 5, der relativ zum Stator 4 um die Achse A der Wickelfederkassette drehbar ist. In dem durch den Stator 4 und den Rotor 5 begrenzten Wickelraum 6 ist mindestens Leitung 7, beispielsweise eine FBL, untergebracht, von der nur einige Windungen schematisch eingezeichnet sind. Die Leitung 7 ist mit einem Ende mit dem Stator 4 und mit dem anderen Ende mit dem Rotor 5 in bekannter Weise verbunden. Die Wickelfederkassette 2 ist für den Einbau in das Lenkrad des Kraftfahrzeugs bestimmt, wobei der Rotor 5 mit dem Lenkrad und damit relativ zu dem fahrzeugfesten Stator 4 drehbar ist.

Das folienartige Etikett 3 hält die Wickelfederkassette 2 in Montageposition für ihren Einbau in das Lenkrad des Kraftfahrzeugs. In Montageposition werden der Stator 4 und der Rotor 5 der Wickelfederkassette 2 durch das Etikett 3 in einer vorgegebenen relativen Position zueinander fixiert. Das Etikett 3 ist außen derart an der Wickelfederkassette 2 angebracht, daß es sich sowohl über den Rotor 5 als auch den Stator 4 erstreckt, wie in Fig. 1 dargestellt. Das Etikett 3 ist sowohl am Stator 4 als auch am Rotor 5 mechanisch festgelegt. Die in Fig. 1 schematisch dargestellten Befestigungspunkte 8 können durch Klemmscheiben oder durch Nieten jeweils am Stator 4 und am Rotor 5 realisiert werden. Es wird hierfür ein thermoplastisch verformbarer Nietbolzen verwendet. Durch die mechanische Festlegung ist das Etikett 3 unlösbar mit der Wickelfederkassette 2 verbunden und garantiert dadurch die Mittelstellungsfixierung derselben während des Einbaus in das Lenkrad.

Das Etikett 3 kann beispielsweise aus Polyethylen bestehen. Das Etikett 3 kann weiterhin auf seiner Rückseite mit Klebstoff beschichtet sein, sodaß es zusätzlich zu der mechanischen Festlegung am Stator 4 und am Rotor 5 an die Wickelfederkassette 2 geklebt werden kann. Die Breite des Etiketts 3 (senkrecht zur Blattebene in Fig. 1) ist derart, daß Stator 4 und Rotor 5 in Montageposition sicher fixiert werden, ohne daß das Etikett 3 versehentlich zerreißt.

Nach dem Einbau der Wickelfederkassette 2 in das Lenkrad des Kraftfahrzeugs wird die Wickelfederkassette 2 in Arbeitsposition gebracht, indem das folienartige Etikett 3 während der ersten Drehbewegung des Lenkrads zerrissen wird, sodaß der Stator 4 und der Rotor 5 relativ zueinander drehbar sind. In der bevorzugten Ausführungsform der erfindungsgemäßen Vorrichtung 1 nach Fig. 1 weist das Etikett 3 eine Sollbruchstelle 9 auf, sodaß das Etikett 3 bei der Rotationsbewegung des Rotors 5 an der Sollbruchstelle 9 zerrissen wird. Die Sollbruchstelle 9 befindet sich vorzugsweise in unmittelbarer Nähe der Übergangsstelle zwischen Stator 4 und Rotor 5, wie in Fig. 1 angedeutet, sodaß Teile des Etiketts 3 in Arbeitsposition der Wickelfederkassette 2 die Rotation des Rotors 5 nicht beeinträchtigen können.

## Patentansprüche

1. Vorrichtung (1) zur Übertragung von elektrischem Strom und/oder von Signalen in einem Kraftfahrzeug, welche eine aus einem Stator (4) und einem Rotor (5) bestehende Wickelfederkassette (2) aufweist, in welcher mindestens eine in Windungen verlaufende Leitung (7) angeordnet ist, die mit einem Ende mit dem Stator (4) und mit dem anderen Ende mit dem Rotor (5) verbunden ist, und welche mindestens ein Fixierelement (3) aufweist, durch welches eine für den Einbau der Wickelfederkassette (2) in das Lenkrad des Kraftfahrzeugs vorgegebene relative Position von Stator (4) und Rotor (5) zueinander fixiert ist, bei welcher das Fixierelement ein folienartiges Etikett (3) ist, das außen an der Wickelfederkassette (2) angebracht ist, sich vom Rotor (5) bis zum Stator (4) erstreckt und an beiden Teilen festgelegt ist, **dadurch gekennzeichnet, daß** an Befestigungspunkten (8), die sowohl am Stator (4) als auch am Rotor (5) vorhanden sind, thermoplastisch verformbare Nietbolzen angebracht sind, an denen das Etikett (3) durch Nieten oder durch Klemmscheiben unlösbar mechanisch festgelegt ist.

2. Vorrichtung nach Anspruch 1, **dadurch gekennzeichnet, daß** das Etikett (3) eine Sollbruchstelle (9) aufweiset, so dass das Etikett (3) bei der Rotationsbewegung des Rotors (5) an der sollbruchstelle (9) zerrissen wird.

## Claims

1. A device (1) for transmitting electrical current and/or signals in a motor vehicle, which has a coil spring cassette (2) consisting of a stator (4) and a rotor (5), in which at least one line (7) running in windings is arranged, which is connected with one end to the stator (4) and with the other end to the rotor (5), and which has at least one fixing element (3), through which a relative position of stator (4) and rotor (5) given for the installation of the coil spring cassette (2) into the steering wheel of the motor vehicle is fixed in relation to each other, in which the fixing element is a film-like label (3), which is attached externally to the coil spring cassette (2), extends from the rotor (5) up to the stator (4) and is fixed to both parts, **characterized in that** thermo-plastically deformable riveting bolts are attached at fastening points (8), which are present both on the stator (4) as well as on the rotor (5), to which riveting bolts the label (3) is non-detachably mechanically fixed by rivets or by clamping disks.

2. A device according to Claim 1, **characterized in that** the label (3) has a predetermined breaking point (9), so that the label (3) is broken during the rotational movement of the rotor (5) at the predetermined breaking point (9).

## Revendications

1. Dispositif (1) pour la transmission d'un courant électrique et/ou de signaux dans un véhicule à moteur, qui comprend une cassette à ressort d'enroulement (2) constituée d'un stator (4) et d'un rotor (5), dans laquelle au moins un câble (7) enroulé en spires est disposé, qui est relié avec une extrémité, avec le stator (4) et, avec l'autre extrémité, avec le rotor (5) et qui comprend au moins un élément de fixation (3) grâce auquel une position relative du stator (4) et du rotor (5), prédéterminée pour le montage de la cassette à ressort d'enroulement (2) dans le volant est fixée, dans laquelle l'élément de fixation est une étiquette (3) en forme de film, qui est montée à l'extérieur sur la cassette à ressort d'enroulement (2), qui s'étend du rotor (5) au stator (4) et qui est fixé sur les deux pièces, **caractérisé en ce que**, au niveau de points de fixation (8), qui se trouvent aussi bien sur le stator (4) que sur le rotor (5), sont montés des tiges rivetées déformables de manière thermoplastique, sur lesquelles l'étiquette (3) est fixée de manière mécanique et inamovible par des rivets ou par des rondelles de serrage.

2. Dispositif selon la revendication 1, **caractérisé en ce que** l'étiquette (3) présente un point de rupture (9), de façon à ce que l'étiquette (3) soit déchirée lors du mouvement de rotation du rotor (5) au niveau du point de rupture (9).
